# EUROPEAN PATENT SPECIFICATION

(11) **EP 2 773 060 B1**
(45) Date of publication and mention of the grant of the patent: **30.03.2016**
(21) Application number: 12843628.4
(22) Date of filing: 22.10.2012
(51) Int. Cl.: H04L 1/16, H04W 72/04, H04L 5/00

(54) **CONTROL SIGNALING TRANSMISSION METHOD, BASE STATION, TERMINAL AND SYSTEM**
STEUERSIGNALISIERUNGSÜBERTRAGUNGSVERFAHREN, BASISSTATION, ENDGERÄT UND SYSTEM
PROCÉDÉ DE TRANSMISSION DE SIGNALISATION DE COMMANDE, STATION DE BASE, TERMINAL ET SYSTÈME

(30) Priority: 27.10.2011 CN 201110332505
(43) Date of publication of application: 03.09.2014
(73) Proprietor: China Mobile Communications Corporation, Beijing 100032 (CN)
(72) Inventor: SHI, Zhihua, Beijing 100032 (CN); SHEN, Xiaodong, Beijing 100032 (CN); LIU, Jianjun, Beijing 100032 (CN); PAN, Chengkang, Beijing 100032 (CN); WANG, Qixing, Beijing 100032 (CN); LIU, Guangyi, Beijing 100032 (CN)
(74) Representative: Körfer, Thomas
(86) International application number: PCT/CN2012/083321
(87) International publication number: WO 2013/060253

(56) References cited:
- WO-A1-2011/085192
- CN-A- 101 867 953
- CN-A- 102 158 979
- CN-A- 102 170 703
- CN-A- 102 202 324
- LG ELECTRONICS: "Consideration on common search space configuration for rel-11 UEs", 3GPP DRAFT; R1-113196 CONFIGURATION OF CSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538318, [retrieved on 2011-10-04]
- FUJITSU: "Control Signaling Enhancements for DL-MIMO", 3GPP DRAFT; R1-113472_E_PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 5 October 2011 (2011-10-05), XP050538555, [retrieved on 2011-10-05]

## Description

### Field

The present invention relates to the field of wireless communications and particularly to a method of transmitting control signaling, a base station, a user equipment and a system.

### Background

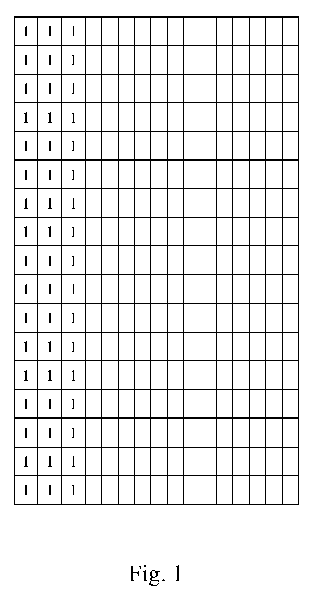

In Long Term Evolution (LTE) systems of Releases 8, 9 and 10 (R8/9/10), a Physical Downlink Control Channel (PDCCH) is transmitted in first several Orthogonal Frequency Division Multiplexing (OFDM) symbols and data is transmitted in subsequent symbols in a pair of Transmission Time Intervals (TTIs) (two slots). As per a different system configuration, a PDCCH in a conventional LTE system may occupy 1 to 3 OFDM symbols (more than 10 Physical Resource Blocks (PRBs) of the system in the downlink) or 2 to 4 OFDM symbols (10 PRBs or less of the system in the downlink), where a particular number of occupied OFDM symbols is indicated by Physical Control Format Indicator Channel (PCFICH) information. A User Equipment (UE) can determine the number of OFDM symbols occupied by the PDDCH in transmission at a current instance of time and the serial number of a starting OFDM symbol for data transmission by detecting the PCFICH information. As illustrated in Fig. 1, there is illustrated a schematic diagram of transmission of a PDCCH at an instance of time, where first three OFDM symbols are occupied by the PDCCH.

The technology of Multiple-Input Multiple-Output (MIMO) has been widely applied since the birth of the LTE R8, and an operating mechanism of Multi-User Multiple-Input Multiple-Output (MIMO) has been enhanced and optimized in the LTE R9 and the LTE R10. A significant increase in the number of user equipments operating in the MU-MIMO mechanism is expected in the LTE R9 and the LTE R10. In order to support concurrent transmission by a large number of user equipments, the capacity of PDCCHs in the system is challenged.

For some new deployment scenarios, for example, a scenario in which a macro cell and multiple Radio Remote Heads (RRHs) share the same cell identifier (ID), that is, they are in the same cell, the capacity of PDCCHs may be limited and consequently fail to support a large number of user equipments, so there is a demand for a higher capacity of PDCCHs.

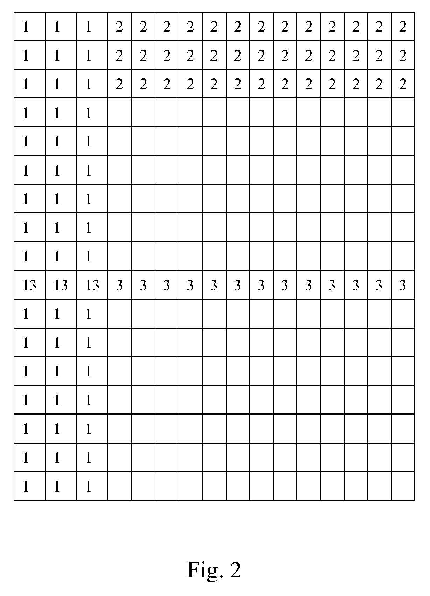

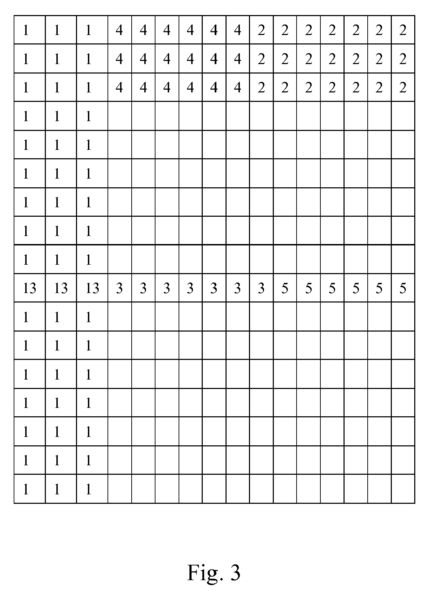

Thus at present an Enhanced Physical Downlink Control Channel (E-PDCCH) has come under discussion in the LTE R11, and a general idea of the enhanced PDCCH is to put information of a control channel onto a resource of a Physical Downlink Shared Channel (PDSCH) in the R8/9/10 for transmission, and currently there are some solutions thereto, particularly as illustrated in Fig. 2 and Fig. 3, where in Fig. 2, a cell grid denoted by 1 represents a resource occupied by a PDCCH, a cell grid denoted by 13 represent a resource occupied by both a PDCCH and an E-PDCCH, and each of cell grids denoted by 2 and 3 represents a resource occupied by an E-PDCCH; and in Fig. 3, a cell grid denoted by 1 represents a resource occupied by a PDCCH, a cell grid denoted by 13 represent a resource occupied by both a PDCCH and an E-PDCCH, and each of cell grids denoted by 2, 3, 4 and 5 represents a resource occupied by an E-PDCCH
The document LG Electronics: "Consideration on common search space configuration for rel-11 UEs", R1-113196, XP050538318, 04.10.2011, discloses UE blind decoding procedures to receive common control information for E-PDCCH for downlink control information.

However there has been so far neither detailed design solution to an E-PDCCH nor design solution to an interrelationship between an E-PDCCH and a conventional PDCCH for their effective cooperation in operation.

### Summary

Embodiments of the invention provide a method of transmitting control signaling, a base station, a user equipment and a system so as to transmit control signaling of a user equipment operating in an E-PDCCH mode.

A method of transmitting control signaling includes:
a base station instructing a user equipment via signaling to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel (PDCCH); and
the base station transmitting the control signaling to the user equipment over the resource corresponding to the enhanced physical downlink control channel and the resource corresponding to the common search space upon reception of a feedback message of the user equipment,
wherein the feedback message notifies the base station that the user equipment has switched to the enhanced physical downlink control channel mode.

A base station includes:
a first sending module configured to instruct a user equipment via signaling to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel (PDCCH);
a reception module configured to receive a feedback message of the user equipment, wherein the feedback message notifies the base station that the user equipment has switched to the enhanced physical downlink control channel mode; and
a signaling transmission module configured to transmit the control signaling to the user equipment over the resource corresponding to the enhanced physical downlink control channel and the resource corresponding to the common search space after the reception module receives the feedback message.

A user equipment includes:
a first reception module configured to receive signaling of a base station to instruct the user equipment to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel (PDCCH);
a first sending module configured to send a feedback message to the base station, wherein the feedback message notifies the base station that the user equipment has switched to the enhanced physical downlink control channel mode, and
a second reception module configured to receive the control signaling transmitted by the base station over the resource corresponding to the enhanced physical downlink control channel and the resource corresponding to the common search space of the physical downlink control channel.

A system for transmitting control signaling includes a base station and a user equipment, wherein:
the base station is configured to instruct the user equipment via signaling to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel (PDCCH), and to transmit the control signaling to the user equipment over the resource corresponding to the enhanced physical downlink control channel and the resource corresponding to the common search space upon reception of a feedback message of the user equipment, wherein the feedback message notifies the base station that the user equipment has switched to the enhanced physical downlink control channel mode; and
the user equipment is configured to receive the signaling to instruct the user equipment to switch to the enhanced physical downlink control channel mode, and the control signaling, transmitted by the base station, and to return the feedback message to the base station.

With the solutions according to the embodiments of the invention, when a user equipment operates in an E-PDCCH mode, a base station can transmit control signaling to the user equipment over a resource corresponding to an E-PDCCH and a resource corresponding to a common search space, that is, a scheme to transmit control signaling over a resource corresponding to a common search space is reserved in the E-PDCCH mode to thereby propose an effective mechanism to transmit control signaling of the user equipment operating in the E-PDCCH mode.

### Brief Description of the Drawings

Fig. 1 is a schematic diagram of transmission of a PDCCH at an instance of time in the prior art;
Fig. 2 is a schematic diagram of transmission of an E-PDCCH at an instance of time in the prior art;
Fig. 3 is a schematic diagram of transmission of an E-PDCCH at an instance of time in the prior art;
Fig. 4 is a flow chart of a method of transmitting control signaling according to a first embodiment of the invention;
Fig. 5 is a schematic structural diagram of a base station according to a second embodiment of the invention;
Fig. 6 is a schematic structural diagram of a user equipment according to a third embodiment of the invention; and
Fig. 7 is a schematic structural diagram of a system for transmitting control signaling according to a fourth embodiment of the invention.

### Detailed Description

An effective signaling transmission mechanism has been proposed in solutions according to embodiments of the invention, where a user equipment in an E-PDCCH mode can be enabled, in connection with a scheme to transmit control signaling over a resource corresponding to a common search space, to switch between the E-PDCCH mode and a PDCCH mode by addressing the problem of an ambiguous period in switching between the PDCCH mode and the E-PDCCH mode to thereby switch smoothly between the PDCCH mode and the E-PDCCH mode and avoid the problems of an ambiguous period and an E-PDCCH resource confliction due to an indeterminate operating status of the user equipment in a procedure of updating a parameter configuration of an E-PDCCH and a process of handing the user equipment over between cells.

The solutions according to the invention will be described below in details with reference to the drawings and respective embodiments thereof.

### First Embodiment

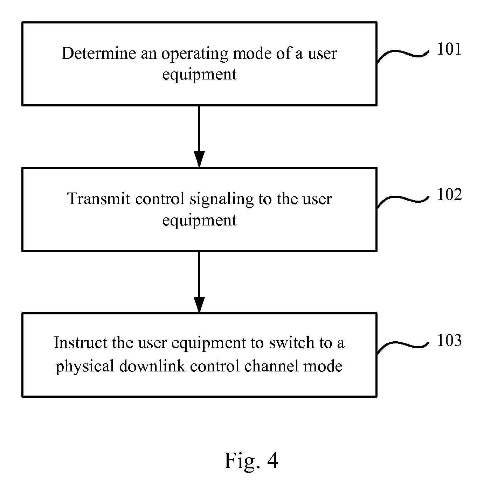

A first embodiment of the invention provides a method of transmitting control signaling, and Fig. 4 illustrates a flow of steps in the method including steps 101 and 102.

The step 101 is to determine an operating mode of a user equipment.

In this step, it can be determined whether the user equipment operates in an enhanced physical downlink control channel mode, and the flow can proceed to the step 102 if the user equipment is determined to operate in the enhanced physical downlink control channel mode.

When a base station (a network) and the user equipment operate in an LTE R8/9/10 operating mechanism, the base station can notify the user equipment (UE) that control signaling will be transmitted to the user equipment over a preset physical resource, and particularly the base station can notify the user equipment (UE) via first Radio Resource Control (RRC) signaling that control signaling will be transmitted to the user equipment over a preset physical resource, to instruct the UE to enter the enhanced physical downlink control channel mode (which can be denoted as the E-PDCCH mode), and the UE can return a corresponding feedback message (e.g., a first RRC feedback message which is an RRC feedback message for the first RRC signaling) to the base station upon reception of the RRC signaling to notify the base station that the user equipment has switched to the enhanced physical downlink control channel mode, and the UE can detect the control signaling over the preset physical resource, that is, operate in the E-PDCCH mode, as instructed by the first RRC signaling.

In an existing PDCCH transmission mode in the LTE R8/9/10, control signaling can be transmitted in two different search spaces including:
a User Equipment (UE)-specific search space in which control signaling of a specific User Equipment (UE) can be transmitted; and
a common search space in which control signaling common to all the user equipments can be transmitted or in which control signaling of any UE can be transmitted.

In this embodiment, the preset physical resource includes both a resource corresponding to an enhanced physical downlink control channel and a resource corresponding to a common search space of a physical downlink control channel, that is, the user equipment operating in the E-PDCCH mode detects control signaling over the resource corresponding to the enhanced physical downlink control channel and control signaling over the resource corresponding to the common search space of the physical downlink control channel.

In this step, the base station can determine that the user equipment operates in the enhanced physical downlink control channel mode upon reception of the feedback (the first RRC feedback message) corresponding to the user equipment.

The step 102 is to transmit control signaling to the user equipment.

In this embodiment, the base station can transmit control signaling to the user equipment over a resource corresponding to an enhanced physical downlink control channel and a resource corresponding to a common search space of a physical downlink control channel upon determining that the user equipment operates in the enhanced physical downlink control channel mode.

Furthermore after instructing the user equipment via the first RRC signaling to switch to the enhanced physical downlink control channel mode and before receiving the first RRC feedback message of the user equipment, the base station stays in an ambiguous period during which the UE is not certain to operate in the E-PDCCH mode or the PDCCH mode at each particular instance of time and the base station can transmit the control signaling to the user equipment over the resource corresponding to the common search space.

This embodiment can further include the following step 103.

The step 103 is to instruct the user equipment to switch to a physical downlink control channel model.

The base station can instruct the user equipment to switch from the enhanced physical downlink control channel mode to a conventional physical downlink control channel mode (which can be denoted as a PDCCH mode), and particularly the base station can instruct the user equipment via second RRC signaling to switch from the enhanced physical downlink control channel mode to the physical downlink control channel mode, and after instructing the user equipment to switch from the enhanced physical downlink control channel mode to the physical downlink control channel mode and before receiving a feedback message (e.g., a second RRC feedback message which is an RRC feedback information for the second RRC signaling) of the user equipment, the base station stays in an ambiguous period during which the UE is not certain to operate in the E-PDCCH mode or the PDCCH mode at each particular instance of time and the base station can transmit the control signaling to the user equipment over the resource corresponding to the common search space, where the second RRC feedback message notifies the base station that the user equipment has switched to the physical downlink control channel mode.

Thus in this embodiment, the base station can transmit the control signaling to the user equipment over the resource corresponding to the common search space after instructing the user equipment to switch from the enhanced physical downlink control channel mode to the physical downlink control channel mode and before receiving the second RRC feedback message of the user equipment.

The base station can transmit the control signaling to the user equipment over the resource corresponding to the common search space or a resource corresponding to the UE-specific search space after receiving the second RRC feedback message of the user equipment.

When the user equipment operates in the enhanced physical downlink control channel mode, the UE can process the control signaling in different schemes while the UE is being handed over from a current cell to an adjacent cell.

In a scheme, before (or at the same time as) issuing a handover instruction to the UE, the base station instructs the UE to switch to the conventional PDCCH mode and after determining that the UE has finished the handover, the base station decides from a UE feedback and a system condition whether to instruct the UE to switch to the E-PDCCH mode. In this scheme, the control signaling is transmitted as in the step 103 in the course of the user equipment switching from the E-PDCCH mode to the conventional PDCCH mode as instructed (e.g., via the relevant RRC signaling) by the base station, that is, the control signaling is transmitted to the user equipment over the resource corresponding to the common search space before switching is finished, and the control signaling is transmitted to the user equipment over the resource corresponding to the common search space or the resource corresponding to the UE-specific search space after switching is finished. The control signaling is transmitted as in the step 102 in the course of the user equipment switching from the conventional PDCCH mode to the E-PDCCH mode as instructed (e.g., via the relevant RRC signaling) by the base station, that is, the control signaling is transmitted to the user equipment over the resource corresponding to the common search space before switching is finished, and the control signaling is transmitted to the user equipment over the resource corresponding to the enhanced physical downlink control channel and the resource corresponding to the common search space after switching is finished.

In another scheme, the base station sends neither PDCCH nor E-PDCCH switch instruction. In this scheme, the base station transmits the control signaling to the user equipment over the resource corresponding to the common search space after instructing the user equipment to be handed over from the current cell to the adjacent cell and before determining that the user equipment has been handed over to the adjacent cell. After determining that the user equipment has been handed over to the adjacent cell, the base station judges whether a corresponding parameter configuration of the enhanced physical downlink control channel before the user equipment is handed over is available, and if so, that is, there is no confliction with any other user equipment in the adjacent cell, then the base station transmits the control signaling to the user equipment over the resource corresponding to the enhanced physical downlink control channel and the resource corresponding to the common search space; otherwise, if it is determined that there is a confliction of the parameter configuration with another user equipment in the adjacent cell, the base station can instruct the user equipment via a higher-layer instruction to update the parameter configuration of the enhanced physical downlink control channel.

After the user equipment is handed over from the current cell to the adjacent cell, the base station instructs the user equipment via the higher-layer instruction to update the parameter configuration of the enhanced physical downlink control channel, or the base station updates the parameter configuration corresponding to the E-PDCCH, e.g., an E-PDCCH search space of the UE, via the higher-layer instruction, due to the confliction of the parameter configuration.

The base station can transmit the control signaling over the resource corresponding to the common search space after instructing the user equipment via the higher-layer instruction to update the parameter configuration of the enhanced physical downlink control channel and before receiving a feedback message of the user equipment for the higher-layer instruction, where the feedback message for the higher-layer instruction notifies the base station that the user equipment has updated the parameter configuration of the enhanced physical downlink control channel.

The base station can transmit the control signaling to the user equipment according to the updated parameter configuration after receiving the feedback message of the user equipment for the higher-layer instruction.

With the solution according to the first embodiment of the invention, not only a scheme to transmit control signaling to the user equipment in various statuses can be defined to thereby address the problem of an ambiguous period due to an indeterminate operating mode of the user equipment, but also blind detection in PDCCH and E-PDCCH search spaces can be avoided to thereby low the complexity of detection by the UE and consequently a cost of the equipment.

The following apparatuses and system are provided based upon the same inventive idea as the first embodiment of the invention.

### Second Embodiment

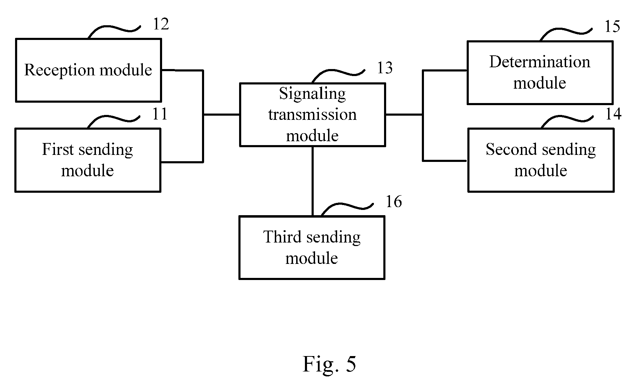

A second embodiment of the invention provides a base station, and as illustrated in Fig. 5, there is illustrated a schematic structural diagram of the base station including a first sending module 11, a reception module 12, and a signaling transmission module 13.

The first sending module 11 is configured to instruct a user equipment via signaling to switch to an enhanced physical downlink control channel mode, where the signaling instructs the user equipment operating in the enhanced physical downlink control channel mode to detect control signaling over a resource corresponding to an enhanced physical downlink control channel and a resource corresponding to a common search space of a physical downlink control channel (PDCCH);

The reception module 12 is configured to receive a feedback message of the user equipment, where the feedback message notifies the base station that the user equipment has switched to the enhanced physical downlink control channel mode; and

The signaling transmission module 13 is configured to transmit the control signaling to the user equipment over the resource corresponding to the enhanced physical downlink control channel and the resource corresponding to the common search space after the reception module receives the feedback message.

The first sending module 11 is further configured to instruct the user equipment via first Radio Resource Control (RRC) signaling to switch to the enhanced physical downlink control channel mode.

The reception module 12 is further configured to receive a first RRC feedback message of the user equipment.

The signaling transmission module 13 is further configured to transmit the control signaling to the user equipment over the resource corresponding to the common search space after the first sending module instructs the user equipment to switch to the enhanced physical downlink control channel mode and before the reception module receives the first RRC feedback message of the user equipment.

The first sending module 11 is further configured to instruct the user equipment via second RRC signaling to switch from the enhanced physical downlink control channel mode to a physical downlink control channel mode.

The reception module 12 is further configured to receive a second RRC feedback message of the user equipment, where the second RRC feedback message notifies the base station that the user equipment has switched to the physical downlink control channel mode.

The signaling transmission module 13 is further configured to transmit the control signaling to the user equipment over the resource corresponding to the common search space after the first sending module instructs the user equipment to switch from the enhanced physical downlink control channel mode to the physical downlink control channel mode and before the reception module receives the second RRC feedback message of the user equipment.

The base station further includes a second sending module 14, a determination module 15 and a third sending module 16.

The second sending module 14 is configured to instruct the user equipment via a handover instruction to be handed over from a current cell to an adjacent cell.

The determination module 15 is configured to determine whether the user equipment has been handed over to the adjacent cell.

The signaling transmission module 13 is further configured to transmit the control signaling to the user equipment over the resource corresponding to the common search space after the second sending module instructs the user equipment to be handed over from the current cell to the adjacent cell and before the determination module determines that the user equipment has been handed over to the adjacent cell, and after the determination module determines that the user equipment has been handed over to the adjacent cell, to judge whether a corresponding parameter configuration of the enhanced physical downlink control channel before the user equipment is handed over is available, and if so, to transmit the control signaling to the user equipment over the resource corresponding to the enhanced physical downlink control channel and the resource corresponding to the common search space; otherwise, to trigger the third sending module 16.

The third sending module 16 is configured to instruct the user equipment via a higher-layer instruction to update the parameter configuration of the enhanced physical downlink control channel.

The reception module 12 is further configured to receive a feedback message of the user equipment for the higher-layer instruction, where the feedback message for the higher-layer instruction notifies the base station that the user equipment has updated the parameter configuration.

The signaling transmission module 13 is further configured to transmit the control signaling to the user equipment over the resource corresponding to the common search space after the third sending module included in the base station instructs the user equipment via the higher-layer instruction to update the parameter configuration of the enhanced physical downlink control channel and before the reception module receives the feedback message of the user equipment for the higher-layer instruction, and to transmit the control signaling according to the updated parameter configuration after the reception module receives the feedback message of the user equipment for the higher-layer instruction.

### Third Embodiment

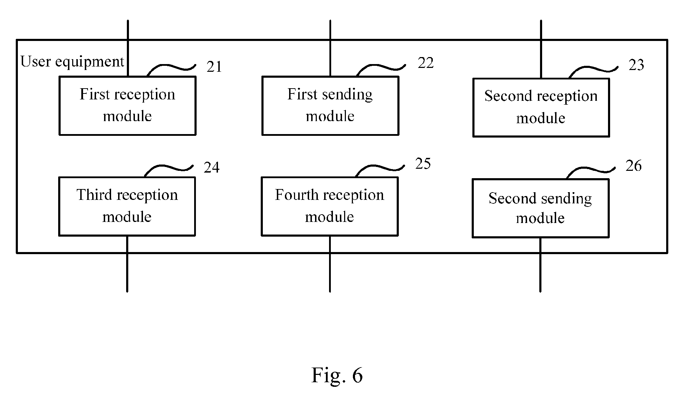

A third embodiment of the invention provides a user equipment, and as illustrated in Fig. 6, there is illustrated a schematic structural diagram of the user equipment including a first reception module 21, a first sending module 22, and a second reception module 23.

The first reception module 21 is configured to receive signaling of a base station to instruct the user equipment to switch to an enhanced physical downlink control channel mode, where the signaling instructs the user equipment operating in the enhanced physical downlink control channel mode to detect control signaling over a resource corresponding to an enhanced physical downlink control channel and a resource corresponding to a common search space of a physical downlink control channel (PDCCH);

The first sending module 22 is configured to send a feedback message to the base station, where the feedback message notifies the base station that the user equipment has switched to the enhanced physical downlink control channel mode. The second reception module 23 is configured to receive the control signaling transmitted by the base station over the resource corresponding to the enhanced physical downlink control channel and the resource corresponding to the common search space of the physical downlink control channel.

The first reception module 21 is further configured to receive first Radio Resource Control (RRC) signaling of the base station to instruct the user equipment to switch to the enhanced physical downlink control channel mode.

The first sending module 22 is further configured to send a first RRC feedback message to the base station.

The second reception module 23 is further configured to receive the control signaling transmitted by the base station to the user equipment over the resource corresponding to the common search space.

The first reception module 21 is further configured to receive second RRC signaling of the base station to instruct the user equipment to switch from the enhanced physical downlink control channel mode to a physical downlink control channel mode; and

The first sending module 22 is configured to send a second RRC feedback message to the base station, where the second RRC feedback message notifies the base station that the user equipment has switched to the physical downlink control channel mode.

The user equipment further includes a third reception module 24 and a fourth reception module 25.

The third reception module 24 is configured to receive a handover instruction of the base station to instruct the user equipment to be handed over from a current cell to an adjacent cell.

The fourth reception module 25 is configured to receive a higher-layer instruction of the base station to update a parameter configuration in the enhanced physical downlink control channel.

The user equipment further includes a second sending module 26.

The second sending module 26 is configured to send a feedback message for the higher-layer instruction to the base station, where the feedback message for the higher-layer instruction notifies the base station that the user equipment has updated the parameter configuration; and

The second reception module 23 is further configured to receive the control signaling transmitted by the base station according to the updated parameter configuration.

### Fourth Embodiment

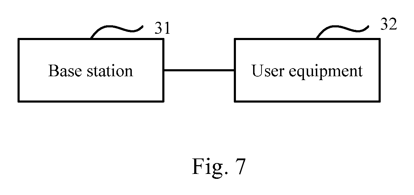

A fourth embodiment of the invention provides a system for transmitting control signaling, and as illustrated in Fig. 7, there is illustrated a schematic structural diagram of the system including a base station 31 and a user equipment 32.

The base station 31 is configured to instruct the user equipment via signaling to switch to an enhanced physical downlink control channel mode, where the signaling instructs the user equipment operating in the enhanced physical downlink control channel mode to detect control signaling over a resource corresponding to an enhanced physical downlink control channel and a resource corresponding to a common search space of a physical downlink control channel PDCCH, and to transmit the control signaling to the user equipment over the resource corresponding to the enhanced physical downlink control channel and the resource corresponding to the common search space upon reception of a feedback message of the user equipment, where the feedback message notifies the base station that the user equipment has switched to the enhanced physical downlink control channel mode; and
The user equipment 32 is configured to receive the signaling to instruct the user equipment to switch to the enhanced physical downlink control channel mode, and the control signaling, transmitted by the base station, and to return the feedback message to the base station.

The base station in this embodiment can be structurally the same as the base station in the second embodiment, and the respective functional units thereof can perform corresponding functions; and the user equipment in this embodiment can be structurally the same as the user equipment in the third embodiment, and the respective functional units thereof can perform corresponding functions.

In summary, an embodiment of the invention provides a system for transmitting control signaling, where not only a scheme to transmit control signaling to the user equipment in various statuses can be defined to thereby address the problem of an ambiguous period due to an indeterminate operating mode of the user equipment, but also blind detection in PDCCH and E-PDCCH search spaces can be avoided to thereby low the complexity of detection by the UE and consequently a cost of the equipment.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the essence and scope of the invention. Thus the invention is also intended to encompass these modifications and variations thereto so long as the modifications and variations come into the scope of the claims appended to the invention and their equivalents.

## Claims

1. A method of transmitting control signaling comprising:
a base station instructing a user equipment via signaling to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel, PDCCH; and
the base station transmitting the control signaling to the user equipment over the resource corresponding to the enhanced physical downlink control channel and the resource corresponding to the common search space upon reception of a feedback message of the user equipment,
wherein the feedback message notifies the base station that the user equipment has switched to the enhanced physical downlink control channel mode.

2. The method of claim 1, wherein:
the base station instructing the user equipment via the signaling to switch to the enhanced physical downlink control channel mode comprises:
the base station instructing the user equipment via first Radio Resource Control, RRC, signaling to switch to the enhanced physical downlink control channel mode;
the base station receiving the feedback message of the user equipment comprises:
the base station receiving a first RRC feedback message of the user equipment; and
the method further comprising:
the base station transmitting the control signaling to the user equipment over the resource corresponding to the common search space after instructing the user equipment via the first RRC signaling to switch to the enhanced physical downlink control channel mode and before receiving the first RRC feedback message of the user equipment.

3. The method of claim 1 or 2, further comprising:
the base station transmitting the control signaling to the user equipment over the resource corresponding to the common search space after instructing the user equipment via second RRC signaling to switch from the enhanced physical downlink control channel mode to a physical downlink control channel mode and before receiving second RRC feedback message of the user equipment, wherein:
the second RRC feedback message notifies the base station that the user equipment has switched to the physical downlink control channel mode.

4. The method of claim 1, further comprising:
the base station transmitting the control signaling to the user equipment over the resource corresponding to the common search space after instructing the user equipment via a handover instruction to be handed over from a current cell to an adjacent cell and before determining that the user equipment has been handed over to the adjacent cell; and
after determining that the user equipment has been handed over to the adjacent cell, the base station judging whether a corresponding parameter configuration of the enhanced physical downlink control channel before the user equipment is handed over is available, and if so, then transmitting the control signaling to the user equipment over the resource corresponding to the enhanced physical downlink control channel and the resource corresponding to the common search space; otherwise, the base station instructing the user equipment via a higher-layer instruction to update the parameter configuration of the enhanced physical downlink control channel.

5. The method of claim 4, further comprising:
the base station transmitting the control signaling to the user equipment over the resource corresponding to the common search space after instructing the user equipment via the higher-layer instruction to update the parameter configuration of the enhanced physical downlink control channel and before receiving feedback message of the user equipment for the higher-layer instruction; and
the base station transmitting the control signaling to the user equipment according to the updated parameter configuration after receiving the feedback message of the user equipment for the higher-layer instruction, wherein:
the feedback message for the higher-layer instruction notifies the base station that the user equipment has updated the parameter configuration.

6. A base station comprising:
a first sending module (11) configured to instruct a user equipment via signaling to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel, PDCCH;
a reception module (12) configured to receive a feedback message of the user equipment, wherein the feedback message notifies the base station that the user equipment has switched to the enhanced physical downlink control channel mode; and
a signaling transmission module (13) configured to transmit the control signaling to the user equipment over the resource corresponding to the enhanced physical downlink control channel and the resource corresponding to the common search space after the reception module receives the feedback message.

7. The base station of claim 6, wherein:
the first sending module is further configured to instruct the user equipment via first Radio Resource Control, RRC, signaling to switch to the enhanced physical downlink control channel mode;
the reception module is further configured to receive a first RRC feedback message of the user equipment; and
the signaling transmission module is further configured to transmit the control signaling to the user equipment over the resource corresponding to the common search space after the first sending module instructs the user equipment to switch to the enhanced physical downlink control channel mode and before the reception module receives the first RRC feedback message of the user equipment.

8. The base station of claim 6 or 7, wherein:
the first sending module is further configured to instruct the user equipment via second RRC signaling to switch from the enhanced physical downlink control channel mode to a physical downlink control channel mode;
the reception module is further configured to receive a second RRC feedback message of the user equipment, wherein the second RRC feedback message notifies the base station that the user equipment has switched to the physical downlink control channel mode; and
the signaling transmission module is further configured to transmit the control signaling to the user equipment over the resource corresponding to the common search space after the first sending module instructs the user equipment to switch from the enhanced physical downlink control channel mode to a physical downlink control channel mode and before the reception module receives the second RRC feedback message of the user equipment.

9. The base station of claim 6, further comprising a second sending module, a determination module and a third sending module, wherein:
the second sending module is configured to instruct the user equipment via a handover instruction to be handed over from a current cell to an adjacent cell;
the determination module is configured to determine whether the user equipment has been handed over to the adjacent cell;
the signaling transmission module is further configured to transmit the control signaling to the user equipment over the resource corresponding to the common search space after the second sending module instructs the user equipment to be handed over from the current cell to the adjacent cell and before the determination module determines that the user equipment has been handed over to the adjacent cell, and after the determination module determines that the user equipment has been handed over to the adjacent cell, the signaling transmission module is further configured to judge whether a corresponding parameter configuration of the enhanced physical downlink control channel before the user equipment is handed over is available, and if so, to transmit the control signaling to the user equipment over the resource corresponding to the enhanced physical downlink control channel and the resource corresponding to the common search space; otherwise, to trigger the third sending module; and
the third sending module is configured to instruct the user equipment via a higher-layer instruction to update the parameter configuration of the enhanced physical downlink control channel.

10. The base station of claim 9, wherein:
the reception module is further configured to receive a feedback message of the user equipment for the higher-layer instruction, wherein the feedback message for the higher-layer instruction notifies the base station that the user equipment has updated the parameter configuration; and
the signaling transmission module is further configured to transmit the control signaling to the user equipment over the resource corresponding to the common search space after the third sending module comprised in the base station instructs the user equipment via the higher-layer instruction to update the parameter configuration of the enhanced physical downlink control channel and before the reception module receives the feedback message of the user equipment for the higher-layer instruction, and to transmit the control signaling according to the updated parameter configuration after the reception module receives the feedback message of the user equipment for the higher-layer instruction.

11. A user equipment comprising:
a first reception module (21) configured to receive signaling of a base station to instruct the user equipment to switch to an enhanced physical downlink control channel mode, wherein the signaling instructs the user equipment operating in the enhanced physical downlink control channel mode to detect control signaling over a resource corresponding to an enhanced physical downlink control channel and a resource corresponding to a common search space of a physical downlink control channel, PDCCH;
a first sending module (22) configured to send a feedback message to the base station, wherein the feedback message notifies the base station that the user equipment has switched to the enhanced physical downlink control channel mode, and
a second reception module (23) configured to receive the control signaling transmitted by the base station over the resource corresponding to the enhanced physical downlink control channel and the resource corresponding to the common search space of the physical downlink control channel.

12. The user equipment of claim 11, wherein:
the first reception module is further configured to receive first Radio Resource Control, RRC, signaling of the base station to instruct the user equipment to switch to the enhanced physical downlink control channel mode; and
the first sending module is further configured to send a first RRC feedback message to the base station.

13. The user equipment of claim 11 or 12, wherein:
the first reception module is further configured to receive second RRC signaling of the base station to instruct the user equipment to switch from the enhanced physical downlink control channel mode to a physical downlink control channel mode; and
the first sending module is configured to send a second RRC feedback message to the base station, wherein the second RRC feedback message notifies the base station that the user equipment has switched to the enhanced physical downlink control channel mode.

14. The user equipment of claim 11, further comprising:
a third reception module configured to receive a handover instruction of the base station to instruct the user equipment to be handed over from a current cell to an adjacent cell;
a fourth reception module configured to receive a higher-layer instruction of the base station to update a parameter configuration in the enhanced physical downlink control channel; and
a second sending module configured to send a feedback message for the higher-layer instruction to the base station, wherein the feedback message for the higher-layer instruction notifies the base station that the user equipment has updated the parameter configuration, wherein:
the second reception module is further configured to receive the control signaling transmitted by the base station according to the updated parameter configuration.

15. A system for transmitting control signaling comprising a base station (31) and a user equipment (32),
wherein:
the base station (31) is configured to instruct the user equipment (32) via signaling to switch to an enhanced physical downlink control channel mode, wherein the signaling instructs the user equipment (32) operating in the enhanced physical downlink control channel mode to detect control signaling over a resource corresponding to an enhanced physical downlink control channel and a resource corresponding to a common search space of a physical downlink control channel, PDCCH, and to transmit the control signaling to the user equipment (32) over the resource corresponding to the enhanced physical downlink control channel and the resource corresponding to the common search space upon reception of a feedback message of the user equipment (32), wherein the feedback message notifies the base station (31) that the user equipment (32) has switched to the enhanced physical downlink control channel mode; and
the user equipment (32) is configured to receive the signaling to instruct the user equipment (32) to switch to the enhanced physical downlink control channel mode, and the control signaling, transmitted by the base station (31), and to return the feedback message to the base station (31).

## Patentansprüche

1. Verfahren zum Übertragen einer Steuersignalisierung, umfassend:
eine Basisstation, die ein Nutzergerät durch Signalisierung anweist, in einen verbesserten physikalischen Downlink-Steuerkanalmodus umzuschalten, wobei die Signalisierung das in dem verbesserten physikalischen Downlink-Steuerkanalmodus arbeitende Nutzergerät anweist, die Steuersignalisierung über eine einem verbesserten physikalischen Downlink-Steuerkanal entsprechende Ressource und eine einem gemeinsamen Suchraum eines physikalischen Downlink-Steuerkanals, PDCCH, entsprechende Ressource zu detektieren,
wobei die Basisstation auf Empfang einer Rückkopplungsnachricht des Nutzergeräts hin die Steuersignalisierung zu dem Nutzergerät über die dem verbesserten physikalischen Downlink-Steuerkanal entsprechende Ressource und die dem gemeinsamen Suchraum entsprechende Ressource überträgt
und wobei die Rückkopplungsnachricht der Basisstation meldet, dass das Nutzergerät in den verbesserten physikalischen Downlink-Steuerkanalmodus umgeschaltet hat.

2. Verfahren nach Anspruch 1,
wobei die Basisstation, die das Nutzergerät durch die Signalisierung anweist, in einen verbesserten physikalischen Downlink-Steuerkanalmodus umzuschalten, umfasst:
die Basisstation weist das Nutzergerät durch eine erste Funk-Ressource-Steuer-RRC-Signalisierung an, in den verbesserten physikalischen Downlink-Steuerkanalmodus umzuschalten;
die Basisstation, die die Rückkopplungsnachricht des Nutzergeräts empfängt, umfasst:
die Basisstation empfängt eine erste RRC-Rückkopplungsnachricht des Nutzergeräts;
und wobei das Verfahren ferner umfasst:
die Basisstation überträgt die Steuersignalisierung zu dem Nutzergerät über die dem gemeinsamen Suchraum entsprechende Ressource nach Anweisen des Nutzergeräts durch die erste RRC-Rückkopplungsnachricht, in den verbesserten physikalischen Downlink-Steuerkanalmodus umzuschalten, und vor Empfang der ersten RRC-Rückkopplungsnachricht des Nutzergeräts.

3. Verfahren nach Anspruch 1 oder 2, ferner umfassend:
die Basisstation überträgt die Steuersignalisierung zu dem Nutzergerät über die dem gemeinsamen Suchraum entsprechende Ressource nach Anweisen des Nutzergeräts durch eine zweite RRC-Signalisierung, aus dem verbesserten physikalischen Downlink-Steuerkanalmodus in einen physikalischen Downlink-Steuerkanalmodus umzuschalten, und vor Empfang einer zweiten RRC-Rückkopplungsnachricht des Nutzergeräts, wobei die zweite RRC-Rückkopplungsnachricht der Basisstation meldet, dass das Nutzergerät in den physikalischen Downlink-Steuerkanalmodus umgeschaltet hat.

4. Verfahren nach Anspruch 1, ferner umfassend:
die Basisstation überträgt die Steuersignalisierung zu dem Nutzergerät über eine dem gemeinsamen Suchraum entsprechende Ressource nach Anweisen des Nutzergeräts durch eine Übergabeanweisung, dieses von einer gegenwärtigen Zelle zu einer benachbarten Zelle zu übergeben, und vor Bestimmen, dass das Nutzergerät an die benachbarte Zelle übergeben worden ist;
und nach Bestimmen, dass das Nutzergerät an die benachbarte Zelle übergeben worden ist, entscheidet die Basisstation, ob eine entsprechende Parameterkonfiguration des verbesserten physikalischen Downlink-Steuerkanals vor der Übergabe des Nutzergeräts verfügbar ist, und falls dies der Fall ist, überträgt sie die Steuersignalisierung sodann zu dem Nutzergerät über die dem verbesserten physikalischen Downlink-Steuerkanal entsprechende Ressource und die dem gemeinsamen Suchraum entsprechende Ressource; ansonsten weist die Basisstation das Nutzergerät durch eine Anweisung höherer Schicht an, die Parameterkonfiguration des verbesserten physikalischen Downlink-Steuerkanals zu aktualisieren.

5. Verfahren nach Anspruch 4, ferner umfassend:
die Basisstation überträgt die Steuersignalisierung zu dem Nutzergerät über die dem gemeinsamen Suchraum entsprechende Ressource nach Anweisen des Nutzergeräts durch die Anweisung höherer Schicht, die Parameterkonfiguration des verbesserten physikalischen Downlink-Steuerkanals zu aktualisieren, und vor Empfang einer Rückkopplungsnachricht des Nutzergeräts auf die Anweisung höherer Schicht hin;
und die Basisstation überträgt die Steuersignalisierung zu dem Nutzergerät entsprechend der aktualisierten Parameterkonfiguration nach Empfang der Rückkopplungsnachricht des Nutzergeräts auf die Anweisung höherer Schicht hin,
wobei die Rückkopplungsnachricht auf die Anweisung höherer Schicht hin der Basisstation meldet, dass das Nutzergerät die Parameterkonfiguration aktualisiert hat.

6. Basisstation, umfassend:
ein erstes Sendemodul (11), welches konfiguriert ist, um ein Nutzergerät durch Signalisierung anzuweisen, in einen verbesserten physikalischen Downlink-Steuerkanalmodus umzuschalten, wobei die Signalisierung das Nutzergerät, welches in dem verbesserten physikalischen Downlink-Steuerkanalmodus arbeitet, anweist, die Steuersignalisierung über eine einem verbesserten physikalischen Downlink-Steuerkanal entsprechende Ressource und eine einem gemeinsamen Suchraum eines physikalischen Downlink-Steuerkanals, PDCCH, entsprechende Ressource zu detektieren;
ein Empfangsmodul (12), welches konfiguriert ist, um eine Rückkopplungsnachricht des Nutzergeräts zu empfangen, wobei die Rückkopplungsnachricht der Basisstation meldet, dass das Nutzergerät in den verbesserten physikalischen Downlink-Steuerkanalmodus umgeschaltet hat;
und ein Signalisierungs-Übertragungsmodul (13), welches konfiguriert ist, um die Steuersignalisierung zu dem Nutzergerät über die dem verbesserten physikalischen Downlink-Steuerkanal entsprechende Ressource und die dem gemeinsamen Suchraum entsprechende Ressource zu übertragen, nachdem das Empfangsmodul die Rückkopplungsnachricht empfängt.

7. Basisstation nach Anspruch 6,
wobei das erste Sendemodul ferner konfiguriert ist, um das Nutzergerät durch eine erste Funk-Ressource-Steuer-RRC-Signalisierung anzuweisen, in den verbesserten physikalischen Downlink-Steuerkanalmodus umzuschalten,
wobei das Empfangsmodul ferner konfiguriert ist, um eine erste RRC-Rückkopplungsnachricht des Nutzergeräts zu empfangen,
und wobei das Signalisierungs-Übertragungsmodul ferner konfiguriert ist, um die Steuersignalisierung zu dem Nutzergerät über die dem gemeinsamen Suchraum entsprechende Ressource zu übertragen, nachdem das erste Sendemodul das Nutzergerät anweist, in den verbesserten physikalischen Downlink-Steuerkanalmodus umzuschalten, und bevor das Empfangsmodul die erste RRC-Rückkopplungsnachricht des Nutzergeräts empfängt.

8. Basisstation nach Anspruch 6 oder 7,
wobei das erste Sendemodul ferner konfiguriert ist, um das Nutzergerät durch eine zweite RRC-Signalisierung anzuweisen, aus dem verbesserten physikalischen Downlink-Steuerkanalmodus in einen physikalischen Downlink-Steuerkanalmodus umzuschalten,
wobei das Empfangsmodul ferner konfiguriert ist, um eine zweite RRC-Rückkopplungsnachricht des Nutzergeräts zu empfangen, wobei die zweite RRC-Rückkopplungsnachricht der Basisstation meldet, dass das Nutzergerät in den physikalischen Downlink-Steuerkanalmodus umgeschaltet hat,
und wobei das Signalisierungs-Übertragungsmodul ferner konfiguriert ist, um die Steuersignalisierung zu dem Nutzergerät über die dem gemeinsamen Suchraum entsprechende Ressource zu übertragen, nachdem das erste Sendemodul das Nutzergerät anweist, aus dem verbesserten physikalischen Downlink-Steuerkanalmodus in einen physikalischen Downlink-Steuerkanalmodus umzuschalten, und bevor das Empfangsmodul die zweite RRC-Rückkopplungsnachricht des Nutzergeräts empfängt.

9. Basisstation nach Anspruch 6, ferner umfassend ein zweites Sendemodul, ein Bestimmungsmodul und ein drittes Sendemodul,
wobei das zweite Sendemodul konfiguriert ist, um das Nutzergerät durch eine Übergabeanweisung anzuweisen, von einer gegenwärtigen Zelle zu einer benachbarten Zelle übergeben zu werden,
wobei das Bestimmungsmodul konfiguriert ist, um zu bestimmen, ob das Nutzergerät an die benachbarte Zelle übergegeben worden ist,
wobei das Signalisierungs-Übertragungsmodul ferner konfiguriert ist, um die Steuersignalisierung zu dem Nutzergerät über die dem gemeinsamen Suchraum entsprechende Ressource zu übertragen, nachdem das zweite Sendemodul das Nutzergerät anweist, von der gegenwärtigen Zelle zu der benachbarten Zelle übergeben zu werden, und bevor das Bestimmungsmodul bestimmt, dass das Nutzergerät an die benachbarte Zelle übergeben worden ist, und wobei das Signalisierungs-Übertragungsmodul ferner konfiguriert, um, nachdem das Bestimmungsmodul bestimmt, dass das Nutzergerät an die benachbarte Zelle übergeben worden ist, zu entscheiden, ob eine entsprechende Parameterkonfiguration des verbesserten physikalischen Downlink-Steuerkanals verfügbar ist, bevor das Nutzergerät übergeben wird, und um, falls dies der Fall ist, die Steuersignalisierung zu dem Nutzergerät über die dem verbesserten physikalischen Downlink-Steuerkanal entsprechende Ressource und die dem gemeinsamen Suchraum entsprechende Ressource zu übertragen, ansonsten um das dritte Sendemodul zu triggern,
und wobei das dritte Sendemodul konfiguriert ist, um das Nutzergerät durch eine Anweisung höherer Schicht anzuweisen, die Parameterkonfiguration des verbesserten physikalischen Downlink-Steuerkanals zu aktualisieren.

10. Basisstation nach Anspruch 9, wobei das Empfangsmodul ferner konfiguriert ist, um eine Rückkopplungsnachricht des Nutzergeräts auf die Anweisung höherer Schicht hin zu empfangen, wobei die Rückkopplungsnachricht auf die Anweisung höherer Schicht hin der Basisstation meldet, dass das Nutzergerät die Parameterkonfiguration aktualisiert hat,
und wobei das Signalisierungs-Übertragungsmodul ferner konfiguriert ist, um die Steuersignalisierung zu dem Nutzergerät über die dem gemeinsamen Suchraum entsprechende Ressource zu übertragen, nachdem das in der Basisstation enthaltene dritte Sendemodul das Nutzergerät durch die Anweisung höherer Schicht anweist, die Parameterkonfiguration des verbesserten physiklischen Downlink-Steuerkanals zu aktualisieren, und bevor das Empfangsmodul die Rückkopplungsnachricht des Nutzergeräts auf die Anweisung höherer Schicht hin empfängt, und um die Steuersignalisierung entsprechend der aktualisierten Parameterkonfiguration zu übertragen, nachdem das Empfangsmodul die Rückkopplungsnachricht des Nutzergeräts auf die Anweisung höherer Schicht hin empfängt.

11. Nutzergerät, umfassend:
ein erstes Empfangsmodul (21), welches konfiguriert ist, um die Signalisierung einer Basisstation zur Anweisung des Nutzergeräts zu empfangen, in einen verbesserten physikalischen Downlink-Steuerkanalmodus umzuschalten, wobei die Signalisierung das Nutzergerät, welches in dem verbesserten physikalischen Downlink-Steuerkanalmodus arbeitet, anweist, die Steuersignalisierung über eine einem verbesserten physikalischen Downlink-Steuerkanal entsprechende Ressource und eine einem gemeinsamen Suchraum eines physikalischen Downlink-Steuerkanals, PDCCH, entsprechende Ressource zu detektieren;
ein erstes Sendemodul (22), welches konfiguriert ist, um eine Rückkopplungsnachricht zu der Basisstation zu senden, wobei die Rückkopplungsnachricht der Basisstation meldet, dass das Nutzergerät in den verbesserten physikalischen Downlink-Steuerkanalmodus umgeschaltet hat;
und ein zweites Empfangsmodul (23), welches konfiguriert ist, um die von der Basisstation über die dem verbesserten physikalischen Downlink-Steuerkanal entsprechende Ressource und die dem gemeinsamen Suchraum des physikalischen Downlink-Steuerkanals entsprechende Ressource übertragene Steuersignalisierung zu empfangen.

12. Nutzergerät nach Anspruch 11,
wobei das erste Empfangsmodul ferner konfiguriert ist, um die erste Funk-Ressource-Steuer-RRC-Signalisierung der Basisstation zur Anweisung des Nutzergeräts zu empfangen, in den verbesserten physikalischen Downlink-Steuerkanalmodus umzuschalten, und wobei das erste Sendemodul ferner konfiguriert ist, um eine erste RRC-Rückkopplungsnachricht an die Basisstation zu senden.

13. Nutzergerät nach Anspruch 11 oder 12,
wobei das erste Empfangsmodul ferner konfiguriert ist, um eine zweite RRC-Signalisierung der Basisstation zur Anweisung des Nutzergeräts zu empfangen, aus dem verbesserten physikalischen Dowrilink-Steuerkanalmodus in einen physikalischen Downlink-Steuerkanalmodus umzuschalten,
und wobei das erste Sendemodul konfiguriert ist, um eine zweite RRC-Rückkopplungsnachricht zu der Basisstation zu senden, wobei die zweite RRC-Rückkopplungsnachricht der Basisstation meldet, dass das Nutzergerät in den verbesserten physikalischen Downlink-Steuerkanalmodus umgeschaltet hat.

14. Nutzergerät nach Anspruch 11, ferner umfassend:
ein drittes Empfangsmodul, welches konfiguriert ist, um eine Übergabeanweisung der Basisstation zur Anweisung des Nutzergeräts zu empfangen, von einer gegenwärtigen Zelle an eine benachbarte Zelle übergeben zu werden;
ein viertes Empfangsmodul, welches konfiguriert ist, um eine Anweisung höherer Schicht der Basisstation zur Aktualisierung einer Parameterkonfiguration in dem verbesserten physikalischen Downlink-Steuerkanal zu empfangen;
und ein zweites Sendemodul, welches konfiguriert ist, um eine Rückkopplungsnachricht auf die Anweisung höherer Schicht hin an die Basisstation zu senden, wobei die Rückkopplungsnachricht auf die Anweisung höherer Schicht hin der Basisstation meldet, dass das Nutzergerät die Parameterkonfiguration aktualisiert hat;
wobei das zweite Empfangsmodul ferner konfiguriert ist, um die von der Basisstation entsprechend der aktualisierten Parameterkonfiguration übertragene Steuersignalisierung zu empfangen.

15. System zur Übertragung einer Steuersignalisierung, umfassend eine Basisstation (31) und ein Nutzergerät (32),
wobei die Basisstation (31) konfiguriert ist,
um das Nutzergerät (32) durch Signalisierung anzuweisen, in einen verbesserten physikalischen Downlink-Steuerkanalmodus umzuschalten, wobei die Signalisierung das Nutzergerät (32), welches in dem verbesserten physikalischen Downlink-Steuerkanalmodus arbeitet, anweist, die Steuersignalisiserung über eine einem verbesserten physikalischen Downlink-Steuerkanal entsprechende Ressource und eine einem gemeinsamen Suchraum eines physikalischen Downlink-Steuerkanals, PDCCH, entsprechende Ressource zu detektieren,
und um die Steuersignalisierung zu dem Nutzergerät (32) über die dem verbesserten physikalischen Downlink-Steuerkanal entsprechende Ressource und die dem gemeinsamen Suchraum entsprechende Ressource auf Empfang einer Rückkopplungsnachricht des Nutzergeräts (32) hin zu übertragen,
wobei die Rückkopplungsnachricht der Basisstation (31) meldet, dass das Nutzergerät (32) in den verbesserten physikalischen Downlink-Steuerkanalmodus umgeschaltet hat,
und wobei das Nutzergerät (32) konfiguriert ist, um die Signalisierung zur Anweisung des Nutzergeräts (32), in den verbesserten physikalischen Downlink-Steuerkanalmodus umzuschalten, und die von der Basisstation (31) übertragene Steuersignalisierung zu empfangen und die Rückkopplungsnachricht zu der Basisstation (31) zurückzuleiten.

## Revendications

1. Procédé de transmission d'une signalisation de commande comprenant les étapes selon lesquelles :
une station de base donne l'instruction à un équipement utilisateur, via une signalisation, de commuter vers un mode canal de commande de liaison descendante physique amélioré, la signalisation donnant l'instruction à l'équipement utilisateur fonctionnant au mode canal de commande de liaison descendante physique amélioré de détecter une signalisation de commande sur une ressource correspondant à un canal de commande de liaison descendante physique amélioré et une ressource correspondant à un espace de recherche commun d'un canal de commande de liaison descendante physique, PDCCH ; et
la station de base transmet la signalisation de commande à l'équipement utilisateur sur la ressource correspondant au canal de commande de liaison descendante physique amélioré et la ressource correspondant à l'espace de recherche commun lors de la réception d'un message de retour d'information de l'équipement utilisateur,
le message de retour d'information notifiant à la station de base que l'équipement utilisateur a commuté vers le mode canal de commande de liaison descendante physique amélioré.

2. Procédé selon la revendication 1, dans lequel :
l'étape selon laquelle la station de base donne l'instruction à l'équipement utilisateur, via la signalisation, de commuter vers le mode canal de commande de liaison descendante physique amélioré, comprend le fait que :
la station de base donne l'instruction à l'équipement utilisateur, via la première signalisation de Commande de Ressource Radio, RRC, de commuter vers le mode canal de commande de liaison descendante physique amélioré ;
l'étape selon laquelle la station de base reçoit le message de retour d'information de l'équipement utilisateur comprend le fait que :
la station de base reçoit un premier message de retour d'information RRC de l'équipement utilisateur ; et
le procédé comprenant en outre l'étape selon laquelle :
la station de base transmet la signalisation de commande à l'équipement utilisateur sur la ressource correspondant à l'espace de recherche commun après avoir donné l'instruction à l'équipement utilisateur, via la première signalisation RRC, de commuter vers le mode canal de commande de liaison descendante physique amélioré et avant de recevoir le premier message de retour d'information RRC de l'équipement utilisateur.

3. Procédé selon la revendication 1 ou 2, comprenant en outre l'étape selon laquelle :
la station de base transmet la signalisation de commande à l'équipement utilisateur sur la ressource correspondant à l'espace de recherche commun après avoir donné l'instruction à l'équipement utilisateur, via une deuxième signalisation RRC, de commuter du mode canal de commande de liaison descendante physique amélioré vers un mode canal de commande de liaison descendante physique et avant réception du deuxième message de retour d'information RRC de l'équipement utilisateur,
le deuxième message de retour d'information RRC notifiant à la station de base que l'équipement utilisateur a commuté vers le mode canal de commande de liaison descendante physique.

4. Procédé selon la revendication 1, comprenant en outre les étapes selon lesquelles :
la station de base transmet la signalisation de commande à l'équipement utilisateur sur la ressource correspondant à l'espace de recherche commun après avoir donné l'instruction à l'équipement utilisateur, via une instruction de transfert intercellulaire, d'effectuer un transfert d'une cellule en cours vers une cellule adjacente et avant détermination du fait que l'équipement utilisateur a été transféré vers la cellule adjacente ; et
après détermination du fait que l'équipement utilisateur a été transféré vers la cellule adjacente, la station de base estime si une configuration de paramètres correspondante du canal de commande de liaison descendante physique amélioré avant que l'équipement utilisateur soit transféré est ou non disponible, et si tel est le cas, elle transmet alors la signalisation de commande à l'équipement utilisateur sur la ressource correspondant au canal de commande de liaison descendante physique amélioré et la ressource correspondant à l'espace de recherche commun ; autrement, la station de base donne l'instruction à l'équipement utilisateur, via une instruction de couche plus élevée, de mettre à jour la configuration de paramètres du canal de commande de liaison descendante physique amélioré.

5. Procédé selon la revendication 4, comprenant en outre les étapes selon lesquelles :
la station de base transmet la signalisation de commande à l'équipement utilisateur sur la ressource correspondant à l'espace de recherche commun après avoir donné l'instruction à l'équipement utilisateur, via l'instruction de couche plus élevée, de mettre à jour la configuration de paramètres du canal de commande de liaison descendante physique amélioré et avant de revoir le message de retour d'information de l'équipement utilisateur pour l'instruction de couche plus élevée ; et
la station de base transmet la signalisation de commande à l'équipement utilisateur en fonction de la configuration de paramètre mise à jour après avoir reçu le message de retour d'information de l'équipement utilisateur pour l'instruction de couche plus élevée,
le message de retour d'information pour l'instruction de couche plus élevée notifiant à la station de base que l'équipement utilisateur a mis à jour la configuration de paramètres.

6. Station de base comprenant :
un premier module d'envoi (11) configuré pour donner l'instruction à un équipement utilisateur, via une signalisation, de commuter vers un mode canal de commande de liaison descendante physique amélioré, la signalisation donnant l'instruction à l'équipement utilisateur fonctionnant au mode canal de commande de liaison descendante physique amélioré de détecter une signalisation de commande sur une ressource correspondant à un canal de commande de liaison descendante physique amélioré et une ressource correspondant à un espace de recherche commun d'un canal de commande de liaison descendante physique, PDCCH ; et
un module de réception (12) configuré pour recevoir un message de retour d'information de l'équipement utilisateur, le message de retour d'information notifiant à la station de base que l'équipement utilisateur a commuté vers le mode canal de commande de liaison descendante physique amélioré ; et
un module de transmission de signalisation (13) configuré pour transmettre la signalisation de commande à l'équipement utilisateur sur la ressource correspondant au canal de commande de liaison descendante physique amélioré et la ressource correspondant à l'espace de recherche commun après que le module de réception a reçu le message de retour d'information.

7. Station de base selon la revendication 6, dans laquelle :
le premier module d'envoi est en outre configuré pour donner l'instruction à l'équipement utilisateur, via une première signalisation de Commande de Ressource Radio, RRC, de commuter vers le mode canal de commande de liaison descendante physique amélioré ;
le module de réception est en outre configuré pour recevoir un premier message de retour d'information RRC de l'équipement utilisateur ; et
le module de transmission de signalisation est en outre configuré pour transmettre la signalisation de commande à l'équipement utilisateur sur la ressource correspondant à l'espace de recherche commun après que le premier module d'envoi a donné l'instruction a l'équipement utilisateur de commuter vers le mode canal de commande de liaison descendante physique amélioré et avant que le module de réception reçoive le premier message de retour d'information RRC de l'équipement utilisateur.

8. Station de base selon la revendication 6 ou 7, dans laquelle :
le premier module d'envoi est en outre configuré pour donner l'instruction à l'équipement utilisateur, via une deuxième signalisation RRC, de commuter du mode canal de commande de liaison descendante physique amélioré vers un mode canal de commande de liaison descendante physique ;
le module de réception est en outre configuré pour recevoir un deuxième message de retour d'information RRC de l'équipement utilisateur, le deuxième message de retour d'information RRC notifiant à la station de base que l'équipement utilisateur a commuté vers le mode canal de commande de liaison descendante physique ; et
le module de transmission de signalisation est en outre configuré pour transmettre la signalisation de commande à l'équipement utilisateur sur la ressource correspondant à l'espace de recherche commun après que le premier module d'envoi a donné l'instruction à l'équipement utilisateur de commuter du mode canal de commande de liaison descendante physique amélioré vers un mode canal de commande de liaison descendante physique et avant que le module de réception reçoive le deuxième message de retour d'information RRC de l'équipement utilisateur.

9. Station de base selon la revendication 6, comprenant en outre un deuxième module d'envoi, un module de détermination et un troisième module d'envoi, dans laquelle :
le deuxième module d'envoi est configuré pour donner l'instruction à l'équipement utilisateur, via une instruction de transfert intercellulaire, d'effectuer un transfert d'une cellule en cours vers une cellule adjacente ;
le module de détermination est configuré pour déterminer si l'équipement utilisateur a ou non été transféré vers la cellule adjacente ;
le module de transmission de signalisation est en outre configuré pour transmettre la signalisation de commande à l'équipement utilisateur sur la ressource correspondant à l'espace de recherche commun après que le deuxième module d'envoi a donné l'instruction à l'équipement utilisateur d'effectuer un transfert de la cellule en cours vers la cellule adjacente et avant que le module de détermination détermine que l'équipement utilisateur a été transféré vers la cellule adjacente, et après que le module de détermination a déterminé que l'équipement utilisateur a été transféré vers la cellule adjacente, le module de transmission de signalisation est en outre configuré pour estimer si une configuration de paramètres correspondante du canal de commande de liaison descendante physique amélioré avant que l'équipement utilisateur soit transféré est ou non disponible, et si tel est le cas, transmettre la signalisation de commande à l'équipement utilisateur sur la ressource correspondant au canal de commande de liaison descendante physique amélioré et la ressource correspondant à l'espace de recherche commun ; autrement, déclencher le deuxième module d'envoi ; et
le troisième module d'envoi est configuré pour donner l'instruction à l'équipement utilisateur, via une instruction de couche plus élevée, de mettre à jour la configuration de paramètres du canal de commande de liaison descendante physique amélioré.

10. Station de base selon la revendication 9, dans laquelle :
le module de réception est en outre configuré pour recevoir un message de retour d'information de l'équipement utilisateur pour l'instruction de couche plus élevée, le message de retour d'information pour l'instruction de couche plus élevée notifiant à la station de base que l'équipement utilisateur a mis à jour la configuration de paramètres ; et
le module de transmission de signalisation est en outre configuré pour transmettre la signalisation de commande à l'équipement utilisateur sur la ressource correspondant à l'espace de recherche commun après que le troisième module d'envoi compris dans la station de base a donné l'instruction à l'équipement utilisateur, via l'instruction de couche plus élevée, de mettre à jour la configuration de paramètres du canal de commande de liaison descendante physique amélioré et avant que le module de réception reçoive le message de retour d'information de l'équipement utilisateur pour l'instruction de couche plus élevée, et transmettre la signalisation de commande selon la configuration de paramètres mise à jour après que le module de réception a reçu le message de retour d'information de l'équipement utilisateur pour l'instruction de couche plus élevée.

11. Equipement utilisateur comprenant :
un premier module de réception (21) configuré pour recevoir une signalisation d'une station de base pour donner l'instruction à l'équipement utilisateur de commuter vers un mode canal de commande de liaison descendante physique amélioré, la signalisation donnant l'instruction à l'équipement utilisateur fonctionnant au mode canal de commande de liaison descendante physique amélioré de détecter une signalisation de commande sur une ressource correspondant à un canal de commande de liaison descendante physique amélioré et une ressource correspondant à un espace de recherche commun d'un canal de commande de liaison descendante physique, PDCCH ;
un premier module d'envoi (22) configuré pour envoyer un message de retour d'information à la station de base, le message de retour d'information notifiant à la station de base que l'équipement utilisateur a commuté vers le mode canal de commande de liaison descendante physique amélioré, et
un deuxième module de réception (23) configuré pour recevoir la signalisation de commande transmise par la station de base sur la ressource correspondant au canal de commande de liaison descendante physique amélioré et la ressource correspondant à l'espace de recherche commun du canal de commande de liaison descendante physique.

12. Equipement utilisateur selon la revendication 11, dans lequel :
le premier module de réception est en outre configuré pour recevoir une première signalisation de Commande de Ressource Radio, RRC, de la station de base pour donner l'instruction à l'équipement utilisateur de commuter vers le mode canal de commande de liaison descendante physique amélioré ; et
le premier module d'envoi est en outre configuré pour envoyer un premier message de retour d'information RRC à la station de base.

13. Equipement utilisateur selon la revendication 11 ou 12, dans lequel :
le premier module de réception est en outre configuré pour recevoir une deuxième signalisation RRC de la station de base pour donner l'instruction à l'équipement utilisateur de commuter du mode canal de commande de liaison descendante physique amélioré vers un mode canal de commande de liaison descendante physique ; et
le premier module d'envoi est configuré pour envoyer un deuxième message de retour d'information RRC à la station de base, le deuxième message de retour d'information RRC notifiant à la station de base que l'équipement utilisateur a commuté vers le mode canal de commande de liaison descendante physique amélioré.

14. Equipement utilisateur selon la revendication 11, comprenant en outre :
un troisième module de réception configuré pour recevoir une instruction de transfert intercellulaire de la station de base pour donner l'instruction à l'équipement utilisateur d'effectuer un transfert d'une cellule en cours vers une cellule adjacente ;
un quatrième module de réception configuré pour recevoir une instruction de couche plus élevée de la station de base pour mettre à jour une configuration de paramètres dans le canal de commande de liaison descendante physique amélioré ; et
un deuxième module d'envoi configuré pour envoyer un message de retour d'information pour l'instruction de couche plus élevée à la station de base, le message de retour d'information pour l'instruction de couche plus élevée notifiant à la station de base que l'équipement utilisateur a mis à jour la configuration de paramètres ;
le deuxième module de réception étant en outre configuré pour recevoir la signalisation de commande transmise par la station de base selon la configuration de paramètres mis à jour.

15. Système de transmission d'une signalisation de commande, comprenant une station de base (31) et un équipement utilisateur (32), dans lequel :
la station de base (31) est configurée pour donner l'instruction à l'équipement utilisateur (32), via une signalisation, de commuter vers un mode canal de commande de liaison descendante physique amélioré, la signalisation donnant l'instruction à l'équipement utilisateur (32) fonctionnant au mode canal de commande de liaison descendante physique amélioré de détecter une signalisation de commande sur une ressource correspondant à un canal de commande de liaison descendante physique amélioré et une ressource correspondant à un espace de recherche commun d'un canal de commande de liaison descendante physique, PDCCH; et pour transmettre la signalisation de commande à l'équipement utilisateur (32) sur la ressource correspondant au canal de commande de liaison descendante physique amélioré et la ressource correspondant à l'espace de recherche commun lors de la réception d'un message de retour d'information de l'équipement utilisateur (32),
le message de retour d'information notifiant à la station de base (31) que l'équipement utilisateur a commuté vers le mode canal de commande de liaison descendante physique amélioré ; et
l'équipement utilisateur (32) étant configuré pour recevoir la signalisation pour donner l'instruction à l'équipement utilisateur (32) de commuter vers le mode canal de commande de liaison descendante physique amélioré, et la signalisation de commande, transmise par la station de base (31), et renvoyer le message de retour d'information à la station de base (31).
